# EUROPEAN PATENT SPECIFICATION

(11) **EP 2 523 269 B1**
(45) Date of publication and mention of the grant of the patent: **08.07.2015**
(21) Application number: 12002672.9
(22) Date of filing: 17.04.2012
(51) Int. Cl.: H01R 13/66, H01R 43/02, H01R 43/20

(54) **Connector and production method therefor**
Verbinder und Verfahren zu dessen Herstellung
Connecteur et son procédé de production

(30) Priority: 11.05.2011 JP 2011106453
(43) Date of publication of application: 14.11.2012
(73) Proprietor: Sumitomo Wiring Systems, Ltd., Yokkaichi-shi, Mie 510-8503 (JP)
(72) Inventor: Fujisaki, Ryuichi, Yokkaichi-City Mie 510-8503 (JP)
(74) Representative: Müller-Boré & Partner Patentanwälte PartG mbB

(56) References cited:
- JP-A- 3 187 170
- JP-A- 2006 173 414
- US-A- 4 647 138

## Description

The present invention relates to a connector with a built-in electronic device and production method therefor.

For example, a connector disclosed in Japanese Unexamined Patent Publication No. 2006-173414 is known as a connector with a built-in capacitor as an electronic device. This connector is used to dispose a noise preventing capacitor at an intermediate position of a power supply line in the case of sharing a defogger equipped for a rear window of a vehicle with an antenna of a radio or the like. This connector includes a pair of terminal fittings connected to a pair of electrodes provided at both ends of the capacitor and a connector housing made of synthetic resin and accommodating the capacitor and the both terminal fittings. For example, this connector grounds the defogger to a body panel of the vehicle via the capacitor by connecting one terminal fitting to the defogger of the vehicle and bolting the other terminal fitting to the body panel. By doing so, noise produced when a switch of the defogger is turned on and off is suppressed.

The electrode of the capacitor and a connecting portion provided on the terminal fitting are connected, for example, by bringing the tip of a soldering iron into contact with the connecting portion to heat the connecting portion and pressing solder against the connecting portion to melt the solder for soldering.

Out of environmental consideration, the use of lead-free solder has been spreading in recent years. Since lead-free solder has a higher melting point than lead-containing solder, it is difficult to melt the lead-free solder. Thus, unless the capacitor is sufficiently heated, the electrode and the connecting portion are connected by the solder that is not completely melted and voids are formed in the solder. If stress caused by a sudden temperature change is given to a soldered part such as in a heat shock test, a crack resulting from the voids is formed in the soldered part and connection reliability between the electrode and the connecting portion is reduced.

As a measure against this, it is thought to completely melt the solder and suppress the formation of voids by extending a heating time for the connecting portion and sufficiently heating the connecting portion. However, if the heating time for the connecting portion is extended, an electronic device such as a capacitor held in contact with the connecting portion is also heated for a long time, wherefore the electronic device may be damaged by heat.

From Document JP 03-187170, there is known a connector with built-in capacitor, where a pair of guide grooves are formed in a containing chamber inner wall surface of a connector housing from an aperture in the connector housing to a partition wall facing it relative to protrusions formed on both sides of a capacitor holding plate.

The present invention was completed in view of the above situation and an object thereof is to ensure connection reliability between an electronic device and a terminal fitting without damaging the electronic device by heat.

This object is solved according to the invention by the features of the independent claims. Particular embodiments of the invention are subject of the dependent claims.

According to one aspect of the invention, there is provided a connector in which a terminal fitting is formed by press-working a metal base material in the form of a flat plate and an electronic device connected to the terminal fitting is at least partly accommodated in a connector housingmade of synthetic resin, comprising: a connecting head portion which is provided on the terminal fitting, thinner than the base material and to be connected to an electrode provided on the electronic device by soldering; at least one neck portion which is provided on the terminal fitting, narrower than the connecting head portion and resiliently deformable and extends from the connecting head portion; and a molded portion which is provided in the connector housing to integrally at least partly cover the electrode of the electronic device and the connecting head portion of the terminal fitting.

According to a particular embodiment, the terminal fitting is formed by press-working a metal base material substantially in the form of a flat plate.

According to a further particular embodiment, there is provided a connector in which a terminal fitting is formed by press-working a metal base material in the form of a flat plate and an electronic device connected to the terminal fitting is accommodated in a connector housing made of synthetic resin, comprising a connecting head portion which is provided on the terminal fitting, thinner than the base material and to be connected to an electrode provided on the electronic device by soldering; a neck portion which is provided on the terminal fitting, narrower than the connecting head portion and resiliently deformable and extends from the connecting head portion; and a molded portion which is provided in the connector housing to integrally cover the electrode of the electronic device and the connecting head portion of the terminal fitting.

To connect the connecting (head) portion of the terminal fitting and the electrode of the electronic device, for example, the tip of a soldering iron is brought into contact with a part of the connecting (head) portion opposite to a part to be soldered to heat the connecting (head) portion and solder is pressed against the connecting (head) portion to melt the solder, whereby the connecting (head) portion and the electrode are connected by soldering. Further, according to Fourier's law, the quantity of heat ΔQ [J] moving in a section (L×A [m³]) having a thickness L [m] and a cross-sectional area A [m²] can be expressed by ΔQ = (k×A×ΔT×t) when k [W/mk], Δt [K] and t [s] denote thermal conductivity, temperature difference and time. That is, the quantity of heat ΔQ moving in an object can be increased by reducing the thickness L and can be reduced by reducing the cross-sectional area A.

Thus, according to the above configuration, the temperature of the soldered part of the connecting (head) portion can be increased in a short time since the connecting (head) portion is thinner than the base material and the quantity of heat transferring in the connecting (head) portion is larger than that in a connecting (head) portion that is not thinned.

Further, by making the neck portion narrower than the connector mounting portion, the cross-sectional area of the neck portion is formed to be smaller than that of the connecting (head) portion and the quantity of heat transferring in the neck portion per unit time is less as compared with a wide neck portion. Thus, radiation of the heat of the connecting (head) portion via the neck portion can be reduced. As described above, according to the present invention, the connecting (head) portion can be sufficiently heated without extending a heating time for the connecting (head) portion and the escape of the heat of the connecting (head) portion can be reduced. Thus, the electrode and the connecting (head) portion can be connected by soldering by sufficiently melting the solder without forming voids in the solder. In this way, connection reliability between the electronic device and the terminal fitting can be ensured without damaging the electronic device by heat.

If heating and cooling are performed on the connector such as in a heat shock test, the molded portion thermally expands and shrinks more than the terminal fitting and the solder due to a difference in linear expansion coefficient between metal and resin. Thus, stress associated with the deformation of the molded portion concentrates on the connecting (head) portion and the electrode covered by the molded portion and the solder may be cracked or broken. In this respect, since the neck portion can be resiliently deformed according to the deformation of the molded portion according to the above configuration, it is possible to suppress the concentration of stress on the solder and the formation of a crack, a split or the like in the solder.

The following configurations are preferable as embodiments of the present invention.

The connecting portion (particularly the connecting head portion) may be such that a surface to be connected to the electrode of the electronic device is hammered to be larger than before it is hammered.

According to this configuration, the area of the connecting portion (particularly the connecting head portion) to be connected to the electrode can be increased as compared with the case where the connecting portion (particularly the connecting head portion) is in the form of a projection or has an uneven shape. Thus, the electrode and the connecting portion (particularly the connecting head portion) can be more reliably connected and connection reliability between the electrode and the connecting portion (particularly the connecting head portion) can be made more reliable.

The connecting portion (particularly the connecting head portion) may be substantially in the form of a round flat plate.

According to this configuration, since the connecting portion (particularly the connecting head portion) may be substantially in the form of a round flat plate, a force received from the molded portion by the connecting portion (particularly the connecting head portion) (force trying to resiliently deform the connecting portion, particularly the connecting head portion) such as in a heat shock test can be distributed over the entire connecting portion (particularly the entire connecting head portion) without being concentrated on a specific position. Thus, the formation of a crack, a split or the like in the solder attached to the connecting portion (particularly the connecting head portion) can be suppressed as compared with the case where the connecting portion (particularly the connecting head portion) is formed to have a rectangular shape including corners.

The electronic device may be or comprise a capacitor; the terminal fitting may include a ground-side terminal made of iron and having one end connected to a grounding part and the other end connected to the capacitor; and the connecting portion (particularly the connecting head portion) may be formed on the ground-side terminal.

According to this configuration, even in the ground-side terminal made of iron having lower thermal conductivity than copper, the connecting portion (particularly the connecting head portion) can be sufficiently heated without extending the heating time for the connecting portion (particularly the connecting head portion). Thus, the electrode of the capacitor and the connecting portion (particularly the connecting head portion) can be connected by soldering without forming voids in the holder.

A cross-sectional area of the neck portion particularly is smaller than that of the connecting portion.

The connecting portion particularly is formed to be gradually thinner in an extending direction thereof, and/or wherein a surface of the connecting portion substantially opposite to a connecting surface thereof to the electrode is inclined toward the connecting surface.

A substantially central part of the neck portion in the extending direction particularly is hammered at rear corners located on both lateral sides, thereby particularly substantially having a flat semicircular cross section

An intermediate part of the neck portion in the extending direction particularly is made further narrower than upper and/or lower end parts of the neck portion.

A cross-sectional area of the neck portion particularly is set to be about half or less than that of a lower end part of the connecting head portion.

A connecting surface of the connecting portion to be connected to the electrode of the capacitor particularly is formed to be substantially flush with a corresponding surface of the neck portion.

According to a further aspect of the invention, there is provided a production method for a connector, in particular according to the above aspect or a particular embodiment thereof, in which a terminal fitting is formed by a base material and an electronic device connected to the terminal fitting is at least partly accommodated in a connector housing, comprising the following steps: providing a connecting portion on the terminal fitting, thinner than the base material; forming at least one neck portion on the terminal fitting, narrower than the connecting portion and resiliently deformable, which extends from the connecting portion; connecting the connecting portion to an electrode provided on the electronic device by soldering; and molding a molded portion in the connector housing to integrally at least partly cover the electrode of the electronic device and the connecting portion of the terminal fitting.

According to a particular embodiment, the terminal fitting is formed by press-working a metal base material substantially in the form of a flat plate.

Particularly, the connecting portion is formed such that a surface to be connected to the electrode of the electronic device is hammered to be larger than before it is hammered.

Further particularly, the electronic device comprises a capacitor; the terminal fitting includes a ground-side terminal made of iron and having one end connected to a grounding part and the other end connected to the capacitor; and the connecting portion is formed on the ground-side terminal.

According to the above, it is possible to ensure connection reliability between an electronic device and a terminal fitting without damaging the electronic device by heat.
FIG. 1 is a plan view of a ground-side terminal,
FIG. 2 is a front view of the ground-side terminal,
FIG. 3 is a section along III-III of FIG. 1,
FIG. 4 is an enlarged section of an essential part cut along IV-IV of FIG. 2,
FIG. 5 is a plan view showing a state where the ground-side terminal and a wire-side terminal are connected to a capacitor,
FIG. 6 is a side view showing the state of FIG. 5, and
FIG. 7 is a section showing a state where the ground-side terminal and the wire-side terminal connected to the capacitor are mounted in a connector housing.

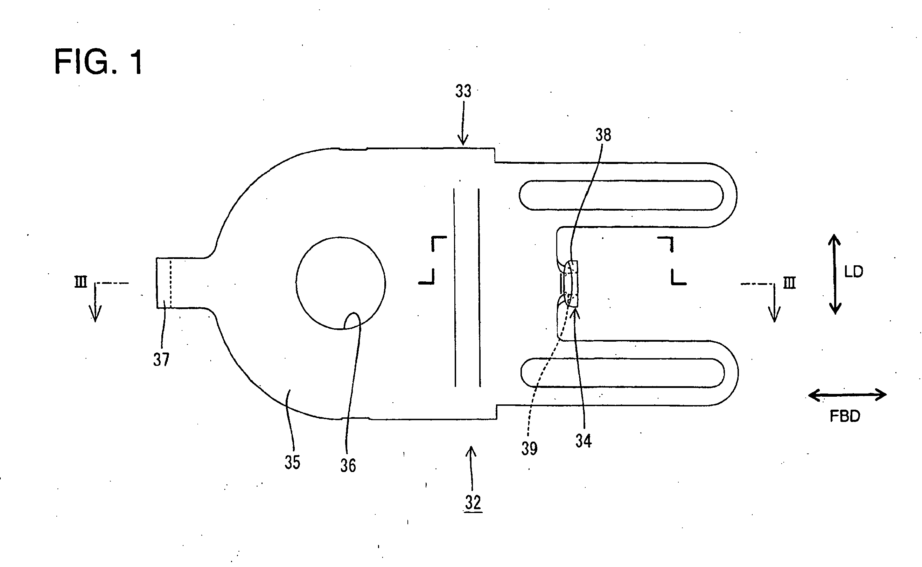

A particular embodiment of the present invention is described with reference to FIGS. 1 to 7.

In this embodiment is illustrated a connector 10 with a built-in capacitor 20 as an electric or electronic device.

This connector 10 particularly is provided for suppressing noise produced e.g. when a switch of an unillustrated defogger equipped in a vehicle is turned on and off particularly by grounding the defogger via the capacitor.

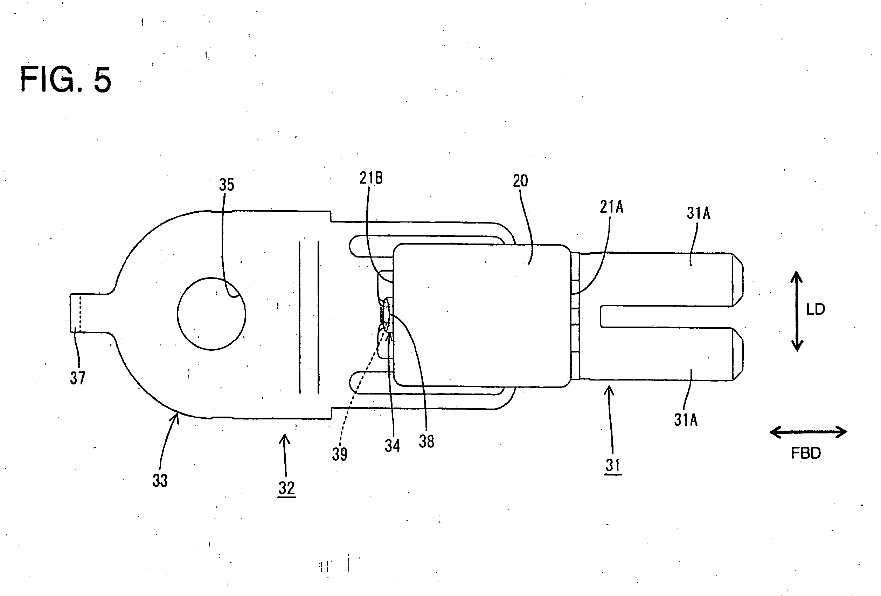

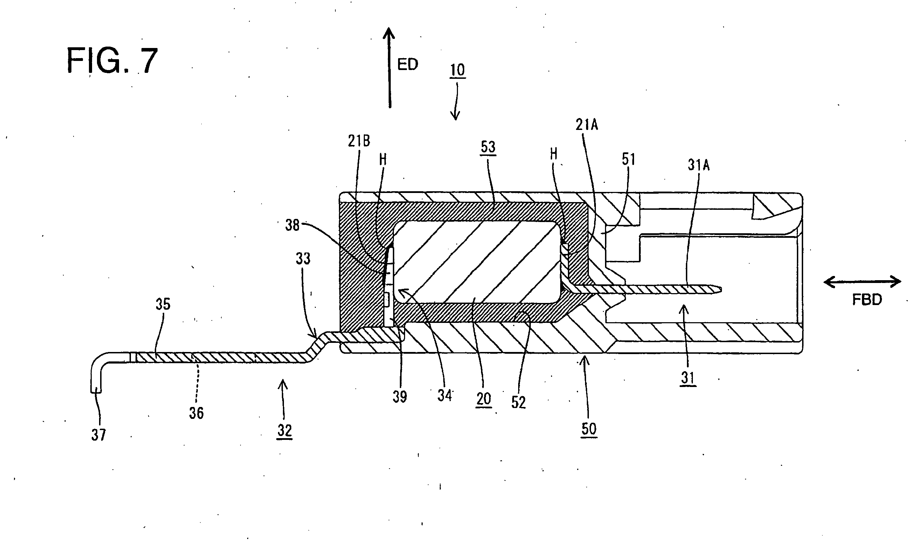

As shown in FIG. 7, the connector 10 includes the capacitor 20 (as a particular electronic device) substantially extending in forward and backward directions FBD, a wire-side terminal 31 to be connected to a wire-side electrode 21A provided on the front end of the capacitor 20, a ground-side terminal 32 (as an example of a "terminal fitting") to be connected to a ground-side electrode 21 B provided on the rear end of the capacitor 20, a connector housing 50 made e.g. of synthetic resin and capable of at least partly accommodating the capacitor 20, and a molded portion 53 integrally at least partly covering the capacitor 20 connected to the wire-side terminal 31 and the ground-side terminal 32. Note that solder H is not shown in FIG. 5 to make connected parts of the capacitor 20 to the wire-side terminal 31 and the ground-side terminal 32 easily seeable.

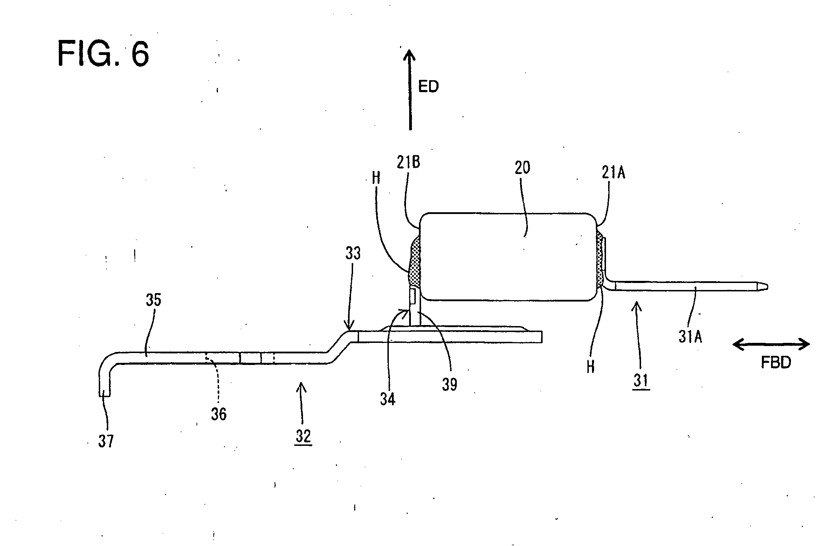

As shown in FIGS. 5 and 6, the capacitor 20 particularly is a film capacitor (particularly having a substantially cylindrical shape) substantially extending in forward and backward directions FBD and wrapped by an evaporated film for capacitor. The wire-side electrode 21A and the ground-side electrode 21 B located at or near the front and rear ends of the capacitor 20 are formed to have a substantially flat surface (particularly by thermally spraying a metal).

As shown in FIGS. 6 and 7, the wire-side terminal 31 particularly is formed by bending a conductive plate (such as a copper or copper alloy flat plate) substantially in an L shape. As shown in FIG. 5, a pair of tab portions 31 A juxtaposed in a lateral direction LD (or in a direction intersecting the forward and backward directions FBD) are formed at or near a front end portion of the wire-side terminal 31. The both tab portions 31 A are to be at least partly inserted into unillustrated male terminal fittings provided in an unillustrated mating connector connected to an electrical/electric equipment such as the defogger to be electrically conductively connected to the female terminal fittings when the mating connector and the connector 10 are connected.

As shown in FIGS. 6 and 7, a portion (e.g. a rear end portion) of the wire-side terminal 31 is electrically conductively connected to the wire-side electrode 21 A of the capacitor 20 particularly by soldering. Note that, in this embodiment, lead-free solder H containing no lead is used out of environmental consideration.

The ground-side terminal 32 particularly is formed by press-working a base material in the form of a flat plate made of an electrically conductive material (such as cold-rolled steel plate, SPC steel plate) and bending a pressed piece and/or includes, as shown in FIGS. 1 to 3, a terminal main body 33 substantially in the form of a flat plate extending in forward and backward directions FBD and a capacitor mounting portion 34 being arranged at an angle different from 0° or 180°, preferably substantially perpendicular to the terminal main body 33, particularly substantially standing upward from the terminal main body 33.

A part of the terminal main body 33 behind an intermediate part (particularly a substantially central part) in forward and backward directions FBD serves as at least one fixing portion 35 to be fixed to the unillustrated body panel of the vehicle, and a bolt insertion hole or recess 36 substantially penetrating in a vertical direction is formed in the fixing portion 35. An unillustrated fixing bolt particularly is to be at least partly inserted into this bolt insertion hole 36 and tightened into the body panel, whereby the fixing portion 35 is electrically conductively connected to the body panel. In this way, the ground-side terminal 32 is or can be grounded to the body panel.

At least one locking piece 37 bent at an angle different from 0° or 180°, preferably substantially perpendicular or downward is provided at or near a rear end part of the fixing portion 35. This locking piece 37 is to be at least partly inserted into an unillustrated locking hole or recess provided in the body panel and to be engaged with the inner surface of the locking hole or recess when the fixing portion 35 is fixed (particularly bolted) to the body panel, thereby preventing the ground-side terminal 32 from being rotated e.g. together with the fixing bolt.

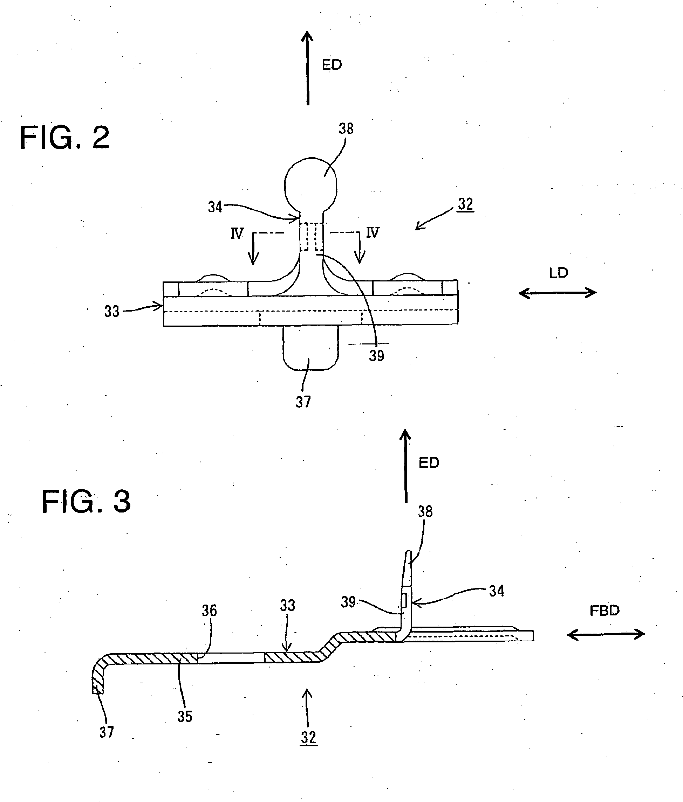

The capacitor mounting portion 34 is formed to be angled at an angle different from 0° or 180°, preferably substantially perpendicular to the plate surface of the terminal main body 33 as shown in FIGS. 3 and 7 particularly by upwardly bending an extending piece extending forward from an intermediate position (particularly a position slightly before the substantially central part of the terminal main body 33) in forward and backward directions FBD. Further, the capacitor mounting portion 34 includes a connecting head portion 38 (as a particular connecting portion) to be electrically conductively connected to the ground-side electrode 21 B of the capacitor 20 (particularly by soldering) and/or a neck portion 39 located below the connecting head portion 38.

As shown in FIGS. 2 and 3, the connecting head portion 38 particularly substantially is in the form of an elliptical or rounded flat plate. The tip of a soldering iron is or can be brought into contact with the rear surface of the connecting head portion 38 to heat the connecting head portion 38 and press the solder H against a part connecting the front surface of the connecting head portion 38 and the ground-side electrode 21 B of the capacitor 20. In this way, the solder H is melted for soldering to electrically conductively connect the connecting head portion 38 to the ground-side electrode 21 B.

The neck portion 39 particularly is substantially in the form of a rectangular column extending in an extending direction ED at an angle different from 0° or 180°, preferably substantially perpendicular to the plate surface of the terminal main body 33 or in the vertical direction and/or integrally or unitarily formed to the terminal main body 33 and/or the connecting head portion 38 to connect the terminal main body 33 and the connecting head portion 38.

As shown in FIG. 7, the connector housing 50 particularly substantially is in the form of a box having open front and rear ends, and/or at least one partition wall 51 is provided in an intermediate part (particularly in a substantially central part) of the connector housing 50 in forward and backward directions FBD.

The mating connector is at least partly fittable into a space of the connector housing 50 before the partition wall 51 and a space of the connector housing 50 behind or on the substantially opposite side of the partition wall serves as a capacitor accommodating space 52 capable of at least partly accommodating the capacitor 20 (as a particular electronic device) connected to the wire-side terminal 31 and the ground-side terminal 32.

The capacitor 20 connected to the wire-side terminal 31 and the ground-side terminal 32 is to be at least partly inserted into this capacitor accommodating space 52 through the rear end opening of the connector housing 50. When the capacitor 20 substantially is inserted to a proper position, the tab portions 31 A at least partly are held in the partition wall 51 while penetrating through the partition wall 51 in forward and backward directions FBD as shown in FIG. 7.

After the capacitor 20 connected to the wire-side terminal 31 and the ground-side terminal 32 substantially is inserted to the proper position into the capacitor accommodating space 52, the connector housing 50 is so oriented that the capacitor accommodating space 52 is open upward and a molding agent such as molten epoxy resin is filled particularly up to a position substantially flush with the rear end surface of the connector housing 50. In this way, the part where the wire-side electrode 21 A and the wire-side terminal 31 are connected particularly by soldering and the part where the ground-side electrode 21 B and the ground-side terminal 32 are connected particularly by soldering at least partly are integrally covered by the molded portion 53 obtained by curing the molding agent (epoxy resin).

The connecting head portion 38 of the capacitor mounting portion 34 of the ground-side terminal 32 is considerably wider than the neck portion 39 in the lateral direction LD as shown in FIG. 2 by having the rear surface thereof hammered or recessed or stamped. That is, the surface (front surface) to be connected to the ground-side electrode 21 B of the capacitor 20 particularly is formed to be larger in the lateral direction than the front surface of the neck portion 39. In other words, the cross-sectional area of the neck portion 39 is smaller than that of the connecting head portion 38 (when cut in a plane perpendicular to the extending direction ED). The front surface of the connecting head portion 38 particularly is formed to be substantially flat as shown in FIGS. 5 and 7 and can be brought into contact (particularly substantially into surface contact) with the ground-side electrode 21 B of the capacitor 20. Further, the connecting head portion 38 is formed to be gradually thinner from the lower end toward the upper end or in the extending direction ED, and/or the rear surface of the connecting head portion 38 is inclined forward. Further, an outer peripheral edge part of the rear surface of the connecting head portion 38 particularly is hammered to be rounded particularly substantially over the entire circumference.

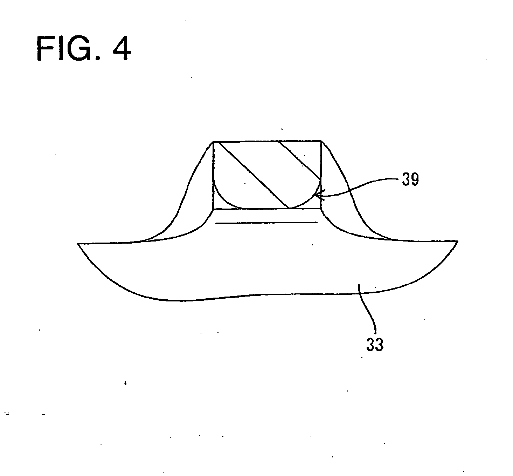

On the other hand, as shown in FIG. 2, the neck portion 39 of the capacitor mounting portion 34 particularly is constricted relative to the connecting head portion 38 and/or narrower than the connecting head portion 38. Further, the neck portion 39 particularly is resiliently deformable in forward and backward directions FBD and/or lateral direction LD. Further, a substantially central part of the neck portion 39 in the vertical direction (or extending direction ED) particularly is hammered at rear corners located on both lateral sides, thereby substantially having a flat semicircular cross section as shown in FIG. 4. Thus, an intermediate part (particularly the substantially central part) of the neck portion 39 in the vertical direction (or extending direction ED) particularly is made further narrower than upper and lower end parts of the neck portion 39. That is, as shown in FIG. 1, the cross-sectional area of the neck portion 39 is set to be less (particularly about half or less) than that of the lower end part of the connecting head portion 38. Further, the front surface of the neck portion 39 particularly is formed to be flush with the front surface of the connecting head portion 38 (surface to be connected to the ground-side electrode 21 B of the capacitor 20).

This embodiment is configured as described above. Next, how to connect the ground-side terminal 32 to the capacitor 20 and functions and effects are described. First, functions and effects of the assembled connector 10 are also described.

To connect the connecting head portion 38 of the ground-side terminal 32 to the ground-side electrode 21 B of the capacitor 20, the tip of the soldering iron is or can be brought into contact with the rear surface of the connecting head portion 38 to heat the connecting head portion 38 with the ground-side electrode 21 B of the capacitor 20 held in contact with the front surface of the connecting head portion 38. Subsequently, the solder H is pressed against a part where the front surface of the connecting head portion 38 and the ground-side electrode 21 B are connected to melt the solder H for soldering, whereby the connecting head portion 38 and the ground-side electrode 21 b are electrically conductively connected. At this time, unless the front surface of the connecting head portion 38 (surface to be connected to the ground-side electrode 21 B of the capacitor 20) is sufficiently heated, the solder H is not completely melted and voids are formed in the solder since the lead-free solder H has a higher melting point than lead-containing solder. Further, since the ground-side terminal 32 particularly is made of a material (such as a steel plate) having lower thermal conductivity than the wire-side terminal 31 (particularly made e.g. of copper or copper alloy), a time to heat the front surface of the connecting head portion 38 tends to become longer as compared with the wire-side terminal 31.

In such a case, the formation of voids may be suppressed by extending a heating time for the connecting head portion 38 by the soldering iron and completely melting the solder H. However, if the heating time for the connecting head portion 38 is extended, the ground-side electrode 21 B of the capacitor 20 is also heated for a longer time, wherefore the capacitor 20 may be damaged by heat.

In this respect, according to this embodiment, the connecting head portion 38 particularly is hammered to be thinner than before it is hammered. According to Fourier's law, the quantity of heat ΔT [J] moving in a section (L×A [m³]) having a thickness L [m] and a cross-sectional area A [m²] can be expressed by ΔQ = (k×A×ΔT×t) when k [W/mk], Δt [K] and t [s] denote thermal conductivity, temperature difference and time. By reducing the thickness L, the quantity of heat ΔQ moving in an object can be increased. Accordingly, the quantity of heat transferred in the connecting head portion 38 becomes larger than before the connecting head portion 38 is hammered, wherefore the temperature of the front surface of the connecting head portion 38 (surface to be connected to the ground-side electrode 21 B of the capacitor 20) can be increased in a short time.

Further, by making the neck portion 39 particularly narrower than the connecting head portion 38, the cross-sectional area of the neck portion 39 is formed to be less (particularly about half or less) than that of the lower end part of the connecting head portion 38. According to Fourier's law described above, the quantity of heat ΔQ moving in an object can be reduced by reducing the cross-sectional area A. Thus, the quantity of heat transferring in the neck portion 39 can be reduced e.g. to about half as compared with the case where the cross-sectional area of the neck portion 39 is the same as the lower end part of the connecting head portion 38, wherefore radiation of the heat of the connecting head portion 38 to the terminal main body 33 via the neck portion 39 can be reduced. Since the connecting head portion 38 can be sufficiently heated without extending the heating time for the connecting head portion 38 and the escape of the heat of the connecting head portion 38 to the terminal main body 33 via the neck portion 39 can be reduced, the ground-side electrode 21 B and the connecting head portion 38 can be soldered by sufficiently melting the solder H without forming voids in the solder H. That is, connection reliability between the capacitor 20 and the ground-side electrode 32 can be ensured without damaging the capacitor 20 by heat and/or overall operability and connection effectiveness are improved.

Further, since the intermediate part (particularly the substantially central part) of the neck portion 39 in the vertical direction (extending direction ED) particularly is made even narrower than the upper and lower end parts, radiation of the heat of the connecting head portion 38 to the terminal main body 33 via the neck portion 39 can be further reduced.

After the wire-side terminal 31 and the ground-side terminal 32 are connected to the capacitor 20, the capacitor 20 connected to the wire-side terminal 31 and the ground-side terminal 32 substantially is inserted to the proper position into the capacitor accommodating space 52 of the connector housing 50. Then, the connector housing 50 is so oriented that the capacitor accommodating space 52 is substantially open upward, and molten molding agent (such as epoxy resin) is filled particularly up to the position substantially flush with the rear end surface of the connector housing 50 and/or of the capacitor 20 to integrally cover the parts where the both electrodes 21 A, 21 B and the wire-side terminal 31 and the ground-side terminal 32 are connected by soldering by the molded portion 53, whereby the connector 10 is completed.

In this process, the molding agent (particularly the molten epoxy resin) is thermally shrunk when being cured and stress associated with thermal shrinkage concentrates on the connecting head portion 38 and the ground-side electrode 21 B. Thus, the solder H may be cracked or broken. However, since the neck portion 39 can be resiliently deformed according to thermal shrinkage deformation of the molding agent (epoxy resin) according to this embodiment, it is possible to suppress the concentration of stress on the solder H and the formation of a crack, a split or the like in the solder H.

If the connector 10 is subjected to a test in which heating and cooling are performed such as a heat shock test, stress associated with the deformation of the molded portion 53 concentrates on the connecting head portion 38 and the ground-side electrode 21 B due to a difference in linear expansion coefficient between metal and resin as when a potting material is cured and shrunk. Also in this case, the neck portion 39 is resiliently deformed according to the deformation of the molded portion 53, thereby being able to suppress the concentration of stress on the solder H and the formation of a crack, a split or the like in the solder H.

As described above, according to this embodiment, when the tip of the soldering iron is brought into contact with the rear surface of the connecting head portion 38 to heat the connecting head portion 38 and the connecting head portion 38 and the ground-side electrode 21 B are connected by soldering, the connecting head portion 38 can be sufficiently heated particularly without extending the heating time for the connecting head portion 38 and the escape of the heat of the connecting head portion 38 to the terminal main body 33 via the neck portion 39 can be reduced. In this way, the solder H can be sufficiently melted, the ground-side electrode 21 B and the connecting head portion 38 can be soldered without forming voids in the solder H, and connection reliability between the capacitor 20 and the ground-side terminal 32 can be ensured without damaging the capacitor 20 by heat. Further, although stress concentrates on the solder H connecting the connecting head portion 38 and the ground-side electrode 21 B by thermal expansion and shrinkage of the molded portion 53, the neck portion 39 is or can be resiliently deformed according to the deformation of the molded portion 53, whereby the formation of a crack, a split or the like in the solder H can be suppressed.

Further, since the surface (front surface) of the connecting head portion 38 to be connected to the ground-side electrode 21 B of the capacitor 20 particularly is formed to be larger in the lateral direction LD than the front surface of the neck portion 39 and/or the front surface of the connecting head portion 38 is formed to be flat by hammering the rear surface of the connecting head portion 38, the ground-side electrode 21 B and the connecting head portion 38 can be more reliably connected and connection reliability between the electrode and the connecting head portion can be made more reliable.

Since the connecting head portion 38 particularly substantially is in the form of a round flat plate, a force received from the molded portion 53 by the connecting head portion 38 (force trying to resiliently deform the connecting head portion 38) such as in a heat shock test can be distributed over the entire connecting head portion without being concentrated on a specific position. Thus, the formation of a crack, a split or the like in the solder H attached to the connecting head portion can be suppressed as compared with the case where the connecting head portion is formed to have a rectangular shape including corners.

Further, the connecting head portion 38 tends to be heated for a long time since the ground-side terminal 32 made of steel plate has lower thermal conductivity than copper. However, according to this embodiment, the connecting head portion 38 can be sufficiently heated without extending the heating time for the connecting head portion 38 and the escape of the heat of the connecting head portion 38 to the terminal main body 33 via the neck portion 39 particularly can be reduced as compared with the connecting head portion 38 just cut out from the base material. Thus, the solder H is sufficiently melted, which is effective in soldering the ground-side electrode 21 B and the connecting head portion 38.

Accordingly, to ensure connection reliability between an electronic device and a terminal fitting particularly without damaging the electronic device by heat, a connector 10 is provided in which an electric/electronic device such as a capacitor 20 connected to a ground-side terminal 32 formed by press-working a conductive (particularly metal) base material substantially in the form of a flat plate is accommodated in a connector housing 50 made e.g. of synthetic resin includes a connecting head portion 38 which is provided on the ground-side terminal 32, thinner than the base material and to be connected to a ground-side electrode 21 B provided on the capacitor 20 particularly by soldering; a neck portion 39 which is provided on the ground-side terminal 32, narrower than the connecting head portion 38 and resiliently deformable and extends from the connecting head portion 38; and a molded portion 53 which is provided in the connector housing 50 to integrally at least partly cover the ground-side electrode 21 B of the capacitor 20 and the connecting head portion 38 of the ground-side terminal 32.
(1) Although the capacitor 20 is illustrated as an electronic device in the above embodiment, the present invention is not limited to such a mode and can also be applied, for example, to a resistor, a diode, a transistor or the like.
(2) Although the ground-side terminal 32 includes the connector mounting portion 34 in the above embodiment, the present invention is not limited to such a mode. For example, the wire-side terminal 31 may include the connector mounting portion 34.
(3) Although the molded part 53 is formed by filling the molding agent (particularly the epoxy resin) after the capacitor 20 connected to the wire-side terminal 31 and the ground-side terminal 32 is at least partly inserted into the capacitor accommodating space 52 in the above embodiment, the present invention is not limited to such a mode. For example, the molded portion 53 and the connector housing 50 may be integrally formed by insert molding using the capacitor 20 connected to the wire-side terminal 31 and the ground-side terminal 32 as an insert.
(4) Although the ground-side terminal 32 is formed by press-working the SPC steel plate in the above embodiment, the present invention is not limited to such a mode. For example, the ground-side terminal 32 may be formed by press-working a copper or copper alloy plate.

### Reference Numerals

10: connector
20: capacitor (electronic device)
21A: wire-side electrode
21B: ground-side electrode
32: ground-side terminal (terminal fitting)
38: connecting head portion (connecting portion)
39: neck portion
50: connector housing
53: molded portion

## Claims

1. A connector (10) in which a terminal fitting (32) is formed by a base material and an electronic device (20) connected to the terminal fitting (22) is at least partly accommodated in a connector housing (50), comprising:
a connecting portion (38) which is provided on the terminal fitting (32) and to be connected to an electrode (21 B) provided on the electronic device (20) by soldering;and
a molded portion (53) which is provided in the connector housing (50) to integrally at least partly cover the electrode (21 B) of the electronic device (20) and the connecting portion (38) of the terminal fitting (32);
**characterized in** further comprising
at least one neck portion (39) which is provided on the terminal fitting (32), narrower than the connecting portion (38) and resiliently deformable and extends from the connecting portion (38); and in the connecting portion (38) being thinner than the base material.

2. A connector according to claim 1, wherein the terminal fitting (32) is formed by press-working a metal base material substantially in the form of a fiat plate.

3. A connector according to any one of the preceding claims, wherein the connecting portion (38) is such that a surface to be connected to the electrode (21B). of the electronic device (20) is hammered to be larger than before it is hammered.

4. A connector according to any one of the preceding claims, wherein the connecting portion (38) substantially is in the form of a round flat plate.

5. A connector according to any one of the preceding claims, wherein:
the electronic device (20) comprises a capacitor (20);
the terminal fitting (32) includes a ground-side terminal (21 B) made of iron and having one end connected to a grounding part and the other end connected to the capacitor (20); and
the connecting portion (38) is formed on the ground-side terminal (21 B).

6. A connector according to any one of the preceding Claims, wherein a cross-sectional area of the neck portion (39) is smaller than that of the connecting portion (38).

7. A connector according to any one of the preceding claims, wherein the connecting portion (38) is formed to be gradually thinner in an extending direction (ED) thereof, and/or wherein a surface of the connecting portion (38) substantially opposite to a connecting surface thereof to the electrode (21B) is inclined toward the connecting surface.

8. A connector according to any one of the preceding claims, wherein a substantially central part of the neck portion (39) in the extending direction (ED) is hammered at rear corners located on both lateral sides, thereby particularly substantially having a flat semicircular cross section

9. A connector according to any one of the preceding claims, wherein an intermediate part of the neck portion (39) in the extending direction (ED) is made further narrower than upper and/or lower end parts of the neck portion (39).

10. A connector according to any one of the preceding claims, wherein a cross-sectional area of the neck portion (39) is set to be about half or less than that of a lower end part of the connecting head portion (38).

11. A connector according to any one of the preceding claims, wherein a connecting surface of the connecting portion (38) to be connected to the electrode (21B) of the capacitor (20) is formed to be substantially flush with a corresponding surface of the neck portion (39).

12. A production method for a connector (10) in which a terminal fitting (32) is formed by a base material and an electronic device (20) connected to the terminal fitting (22) is at least partly accommodated in a connector housing (50), comprising the following steps:
providing a connecting portion (38) on the terminal fitting (32), thinner than the base material;
forming at least one neck portion (39) on the terminal fitting (32), narrower than the connecting portion (38) and resiliently deformable, which extends from the connecting portion (38);
connecting the connecting portion (38) to an electrode (21 B) provided on the electronic device (20) by soldering; and
molding a molded portion (53) in the connector housing (50) to integrally at least partly cover the electrode (21 B) of the electronic device (20) and the connecting portion (38) of the terminal fitting (32).

13. A production method according to claim 12, wherein the terminal fitting (32) is formed by press-working a metal base material substantially in the form of a flat plate.

14. A production method according to claim 12 or 13, wherein the connecting portion (38) is formed such that a surface to be connected to the electrode (21 B) of the electronic device (20) is hammered to be larger than before it is hammered.

15. A production method according to any one of the preceding claims 12 to 14, wherein:
the electronic device (20) comprises a capacitor (20);
the terminal fitting (32) includes a ground-side terminal (21B) made of iron and having one end connected to a grounding part and the other end connected to the capacitor (20); and
the connecting portion (38) is formed on the ground-side terminal (21 B).

## Patentansprüche

1. Verbinder (10), bei dem ein Anschlusspassstück bzw. -kontakt (32) durch ein Basismaterial gebildet ist und eine elektronische Vorrichtung (20), die mit dem Anschlusspassstück (22) verbunden ist, zumindest teilweise in einem Verbindergehäuse (50) aufgenommen ist, umfassend:
einen Verbindungsabschnitt (38), der an dem Anschlusspassstück (32) bereitgestellt ist und mit einer Elektrode (21 B), die an der elektronischen Vorrichtung (20) bereitgestellt ist, durch Löten zu verbinden ist; und
einen geformten Abschnitt (53), der in dem Verbindergehäuse (50) bereitgestellt ist, um integral zumindest teilweise die Elektrode (21 B) der elektronischen Vorrichtung (20) und den Verbindungsabschnitt (38) des Anschlusspassstücks (32) abzudecken;
**dadurch gekennzeichnet, dass** er ferner umfasst
zumindest einen Nacken- bzw. Halsabschnitt (39), der an dem Anschlusspassstück (32) bereitgestellt ist, schmäler ist als der Verbindungsabschnitt (38) und rückstellfähig verformbar ist und sich von dem Verbindungsabschnitt (38) erstreckt; und
dadurch, dass der Verbindungsabschnitt (38) dünner ist als das Basismaterial.

2. Verbinder nach Anspruch 1, wobei das Anschlusspassstück (32) durch Pressen eines Metallbasismaterials im Wesentlichen in die Form einer flachen Platte gebildet wird.

3. Verbinder nach einem der vorhergehenden Ansprüche, wobei der Verbindungsabschnitt (38) derart ist, dass eine Fläche bzw. Oberfläche, die mit der Elektrode (21 B) der elektronischen Vorrichtung (20) zu verbinden ist, so gehämmert wird, dass sie größer ist als vor dem Hämmern.

4. Verbinder nach einem der vorhergehenden Ansprüche, wobei der Verbindungsabschnitt (38) im Wesentlichen in der Form einer runden flachen Platte ist.

5. Verbinder nach einem der vorhergehenden Ansprüche, wobei:
die elektronische Vorrichtung (20) einen Kondensator (20) umfasst;
das Anschlusspassstück (32) einen masse- bzw. erdungsseitigen Anschluss (21 B) enthält, der aus Eisen besteht und von dem ein Ende mit einem Masse- bzw. Erdungsteil verbunden ist und das andere Ende mit dem Kondensator (20) verbunden ist; und
der Verbindungsabschnitt (38) an dem erdungsseitigen Anschluss (21 B) gebildet ist.

6. Verbinder nach einem der vorhergehenden Ansprüche, wobei eine Querschnittsfläche des Halsabschnitts (39) kleiner ist als diejenige des Verbindungsabschnitts (38).

7. Verbinder nach einem der vorhergehenden Ansprüche, wobei der Verbindungsabschnitt (38) so gebildet ist, dass er in seiner Erstreckungsrichtung (ED) graduell dünner ist, und/oder wobei eine Fläche bzw. Oberfläche des Verbindungsabschnitts (38), die im Wesentlichen gegenüberliegend bzw. entgegengesetzt zu seiner Verbindungsfläche bzw. -oberfläche mit der Elektrode (21 B) ist, zu der Verbindungsfläche hin geneigt ist.

8. Verbinder nach einem der vorhergehenden Ansprüche, wobei ein im Wesentlichen zentraler Teil des Halsabschnitts (39) in der Erstreckungsrichtung (ED) an hinteren Ecken gehämmert wird, die sich auf beiden lateralen Seiten befinden, wodurch er insbesondere im Wesentlichen einen flachen, halbkreisförmigen Querschnitt aufweist.

9. Verbinder nach einem der vorhergehenden Ansprüche, wobei ein Zwischenteil des Halsabschnitts (39) in der Erstreckungsrichtung (ED) ferner bzw. weiter schmäler gemacht ist als obere und/oder untere Endteile des Halsabschnitts (39).

10. Verbinder nach einem der vorhergehenden Ansprüche, wobei eine Querschnittsfläche des Halsabschnitts (39) so festgelegt ist, dass sie etwa die Hälfte oder weniger derjenigen eines unteren Endteils des Verbindungskopfabschnitts (38) ist.

11. Verbinder nach einem der vorhergehenden Ansprüche, wobei eine Verbindungsfläche bzw. oberfläche des Verbindungsabschnitts (38), die bzw. der mit der Elektrode (21B) des Kondensators (20) zu verbinden ist, so gebildet ist, dass sie mit einer entsprechenden Fläche bzw. Oberfläche des Halsabschnitts (39) im Wesentlichen bündig ist.

12. Herstellungsverfahren für einen Verbinder (10), bei dem ein Anschlusspassstück bzw. -kontakt (32) durch ein Basismaterial gebildet wird und eine elektronische Vorrichtung (20), die mit dem Anschlusspassstück (22) verbunden ist, zumindest teilweise in einem Verbindergehäuse (50) aufgenommen wird, umfassend die folgenden Schritte:
Bereitstellen eines Verbindungsabschnitts (38) an dem Anschlusspassstück (32), der dünner ist als das Basismaterial;
Bilden zumindest eines Nacken- bzw. Halsabschnitts (39) an dem Anschlusspassstück (32), der schmäler ist als der Verbindungsabschnitt (38) und rückstellfähig verformbar ist, der sich von dem Verbindungsabschnitt (38) erstreckt;
Verbinden des Verbindungsabschnitts (38) mit einer Elektrode (21 B), die an der elektronischen Vorrichtung (20) bereitgestellt ist, durch Löten; und
Formen eines geformten Abschnitts (53) in dem Verbindergehäuse (50), um integral zumindest teilweise die Elektrode (21 B) der elektronischen Vorrichtung (20) und den Verbindungsabschnitt (38) des Anschlusspassstücks (32) abzudecken.

13. Herstellungsverfahren nach Anspruch 12, wobei das Anschlusspassstück (32) durch Pressen eines Metallbasismaterials im Wesentlichen in die Form einer flachen Platte gebildet wird.

14. Herstellungsverfahren nach Anspruch 12 oder 13, wobei der Verbindungsabschnitt (38) derart gebildet wird, dass eine Fläche bzw. Oberfläche, die mit der Elektrode (21 B) der elektronischen Vorrichtung (20) zu verbinden ist, so gehämmert wird, dass sie größer ist als vor dem Hämmern.

15. Herstellungsverfahren nach einem der Ansprüche 12 bis 14, wobei:
die elektronische Vorrichtung (20) einen Kondensator (20) umfasst;
das Anschlusspassstück (32) einen masse- bzw. erdungsseitigen Anschluss (21 B) enthält, der aus Eisen besteht und von dem ein Ende mit einem Masse-bzw. Erdungsteil verbunden ist und das andere Ende mit dem Kondensator (20) verbunden ist; und
der Verbindungsabschnitt (38) an dem erdungsseitigen Anschluss (21 B) gebildet wird.

## Revendications

1. Connecteur (10) dans lequel un raccord de borne (32) est formé par un matériau de base et un dispositif électronique (20) connecté au raccord de borne (22) est au moins partiellement hébergé dans un logement de connecteur (50), comprenant :
une portion de connexion (38) qui est prévue sur le raccord de borne (32) et devant être connectée à une électrode (21 B) prévue sur le dispositif électronique (20) par brasage ; et
une portion moulée (53) qui est prévue dans le logement de connecteur (50) pour recouvrir au moins partiellement de manière intégrale l'électrode (21 B) du dispositif électronique (20) et la portion de connexion (38) du raccord de borne (32) ;
**caractérisé en ce qu'**il comprend en outre
au moins une portion de col (39) qui est prévue sur le raccord de borne (32), plus étroite que la portion de connexion (38) et déformable de manière élastique, et s'étend depuis la portion de connexion (38) ; et **en ce que** la portion de connexion (38) est plus fine que le matériau de base.

2. Connecteur selon la revendication 1, dans lequel le raccord de borne (32) est formé par travail à la presse d'un matériau de base métallique essentiellement sous la forme d'une plaque plate.

3. Connecteur selon l'une quelconque des revendications précédentes, dans lequel la portion de connexion (38) est telle qu'une surface devant être connectée à l'électrode (21B) du dispositif électronique (20) est martelée pour être plus grande qu'avant d'être martelée.

4. Connecteur selon l'une quelconque des revendications précédentes, dans lequel la portion de connexion (38) est essentiellement sous la forme d'une plaque plate ronde.

5. Connecteur selon l'une quelconque des revendications précédentes, dans lequel :
le dispositif électronique (20) comprend un condensateur (20) ;
le raccord de borne (32) inclut une borne côté terre (21B) réalisée en fer et ayant une extrémité connectée à une partie de mise à la terre et l'autre extrémité connectée au condensateur (20) ; et
la portion de connexion (38) est formée sur la borne côté terre (21B).

6. Connecteur selon l'une quelconque des revendications précédentes, dans lequel une zone en coupe transversale de la portion de col (39) est inférieure à celle de la portion de connexion (38).

7. Connecteur selon l'une quelconque des revendications précédentes, dans lequel la portion de connexion (38) est formée pour être progressivement plus fine dans une direction d'extension (ED) de celle-ci, et/ou dans lequel une surface de la portion de connexion (38) essentiellement à l'opposé d'une surface de connexion de celle-ci à l'électrode (21B) est inclinée vers la surface de connexion.

8. Connecteur selon l'une quelconque des revendications précédentes, dans lequel une partie essentiellement centrale de la portion de col (39) dans la direction d'extension (ED) est martelée au niveau de coins arrière situés sur les deux côtés latéraux, ayant de ce fait notamment essentiellement une section transversale semi-circulaire plate.

9. Connecteur selon l'une quelconque des revendications précédentes, dans lequel une partie intermédiaire de la portion de col (39) dans la direction d'extension (ED) est réalisée de manière encore plus étroite que des parties d'extrémité supérieure et/ou inférieure de la portion de col (39).

10. Connecteur selon l'une quelconque des revendications précédentes, dans lequel une zone en coupe transversale de la portion de col (39) est définie pour faire environ la moitié ou moins de celle d'une partie d'extrémité inférieure de la portion de tête de connexion (38).

11. Connecteur selon l'une quelconque des revendications précédentes, dans lequel une surface de connexion de la portion de connexion (38) devant être connectée à l'électrode (21B) du condensateur (20) est formée pour être essentiellement à fleur avec une surface correspondante de la portion de col (39).

12. Procédé de production d'un connecteur (10) dans lequel un raccord de borne (32) est formé par un matériau de base et un dispositif électronique (20) connecté au raccord de borne (22) est au moins partiellement hébergé dans un logement de connecteur (50), comprenant les étapes suivantes :
fournir une portion de connexion (38) sur le raccord de borne (32), plus fine que le matériau de base ;
former au moins une portion de col (39) sur le raccord de borne (32), plus étroite que la portion de connexion (38) et déformable de manière élastique, qui s'étend depuis la portion de connexion (38) ;
connecter la portion de connexion (38) à une électrode (21B) prévue sur le dispositif électronique (20) par brasage ; et
mouler une portion moulée (53) dans le logement de connecteur (50) pour recouvrir au moins partiellement de manière intégrale l'électrode (21B) du dispositif électronique (20) et la portion de connexion (38) du raccord de borne (32).

13. Procédé de production selon la revendication 12, dans lequel le raccord de borne (32) est formé par travail à la presse d'un matériau de base métallique essentiellement sous la forme d'une plaque plate.

14. Procédé de production selon la revendication 12 ou 13, dans lequel la portion de connexion (38) est formée de telle sorte qu'une surface devant être connectée à l'électrode (21B) du dispositif électronique (20) est martelée pour être plus grande qu'avant d'être martelée.

15. Procédé de production selon l'une quelconque des revendications précédentes 12 à 14, dans laquelle :
le dispositif électronique (20) comprend un condensateur (20) ;
le raccord de borne (32) inclut une borne côté terre (21B) réalisée en fer et ayant une extrémité connectée à une partie de mise à la terre et l'autre extrémité connectée au condensateur (20) ; et
la portion de connexion (38) est formée sur la borne côté terre (21B).
